# EUROPEAN PATENT APPLICATION

(11) **EP 1 071 071 A2**
(43) Date of publication of application: **24.01.2001**
(21) Application number: 00113808.0
(22) Date of filing: 29.06.2000
(51) Int. Cl.: G09G 5/10

(54) **Display with sticking preventing function and sticking preventing method**

(30) Priority: 01.07.1999 JP 18774099
(71) Applicant: NEC CORPORATION, Tokyo (JP)
(72) Inventor: Ujiie, Katsuhiro, c/o NEC Corporation, Tokyo (JP)
(74) Representative: Baronetzky, Klaus, Dipl.-Ing.

(57) **Abstract**

A display which is applicable to a display for time display or the like and is capable of preventing sticking with a simple configuration. The display comprises a display unit for displaying an image with input of video display data including information on a brightness level of each display pixel constituting a screen, a data collecting unit for acquiring and accumulating video display data supplied to the display unit at certain time periods and for collecting brightness levels of the accumulated video display data for each display pixel, an operational processing unit for deriving an average value of the brightness levels for each display pixel from the collection result, a reverse characteristics data converting unit for obtaining reverse characteristic data with reversed brightness levels based on the average brightness level of each display pixel, and a control unit for causing the reverse characteristic data obtained by the reverse characteristic data converting unit to be displayed at the display means for a certain time period instead of the video display data.

## Description

### BACKGROUND OF THE INVENTION

### 1. Field of the Invention:

The present invention relates to a technique for preventing image sticking caused by displaying a still image on a dot matrix display such as a plasma display and a liquid crystal display or on a display such as a CRT (cathode ray tube) display.

### 2. Description of the Prior Art:

In a dot matrix display such as a plasma display and a liquid crystal display or in a display such as a CRT display, image sticking occurs when the same image (including character information) is displayed for a long time, and various approaches are studied for preventing it. An example thereof is an approach of preventing the image sticking with a screen saver or the like. However, since the approach with the screen saver causes a change in a displayed image content, the screen saver cannot be used for a display which provides a timetable or time display (i.e., hour and minutes display), for example.

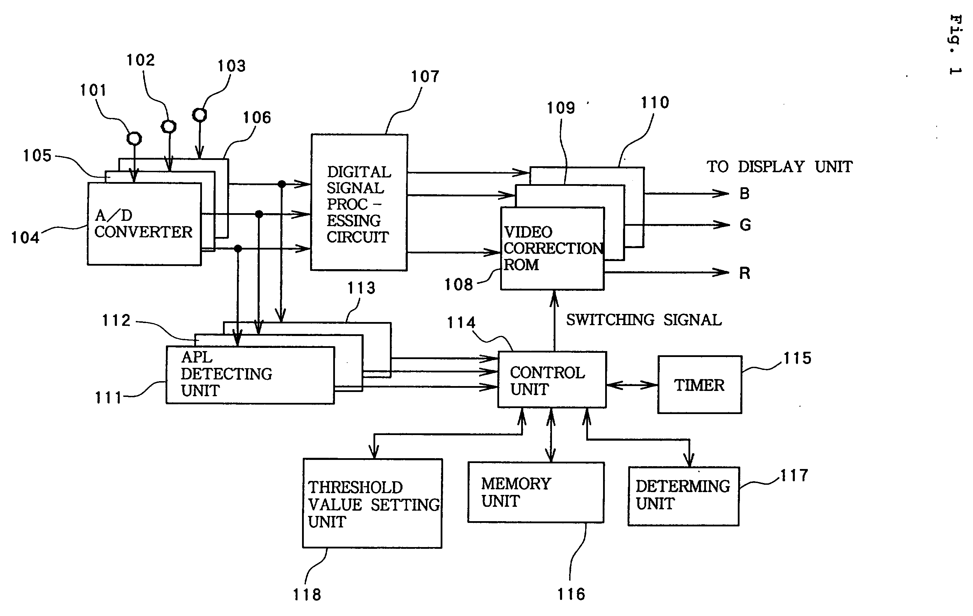

An example of a display with an image sticking preventing function which enables checking of its displayed content and is applicable to the timetable or time display as mentioned above is disclosed in JP-A-9-6273 in which video signals are corrected by switching between gamma correction characteristics and characteristics reverse to the gamma correction characteristics at predetermined time periods. The schematic configuration thereof is shown in Fig. 1.

In Fig. 1, respective input terminals 101 to 103 are supplied with RGB signals (analog signals) which have been subjected to adjustment of brightness, contrast and the like. The RGB signals supplied to input terminals 101 to 103 are converted into digital signals at A/D converters 104 to 106, respectively, and then supplied to digital signal processing circuit 107 and to APL (Average Picture Level) detecting units 111 to 113.

Digital signal processing circuit 107 performs digital processing such as synchronous processing for the respective A/D converted RGB signals. The digital processed RGB signals are respectively corrected for their brightness levels at video correction ROMs 108 to 110, and then supplied to a display unit. Each of video correction ROMs 108 to 110 is capable of switching between gamma correction characteristics for increasing an output level in response to a higher input level and correction characteristics reverse to the gamma correction characteristics, and usually, correction is made with the gamma correction characteristics. The switching from the gamma correction characteristics to the reverse correction characteristics is performed on the basis of a switching signal from control unit 114.

Each of APL detecting units 111 to 113 detects an average brightness level for each frame of a video signal of the A/D converted RGB signals for a predetermined time period. The average brightness levels detected at respective APL detecting units 111 to 113 are provided to control unit 114. Memory unit 116 stores the average brightness levels of the last detection from APL detecting units 111 to 113, and determining unit 117 derives the difference between the currently detected average brightness levels from respective APL detecting units 111 to 113 and the average brightness levels stored in memory unit 116, and determines whether the difference in the brightness level is lower than a threshold value preset in threshold value setting unit 118. When the same image is continuously displayed, the difference in the brightness level is lower than the threshold value.

If the determination result at determining unit 117 indicates that the difference in the brightness level is higher than the threshold value, the content in memory unit 116 is replaced with the newly detected brightness level, or if the difference in the brightness level is lower than the threshold value, timer 115 is driven to start count. The count of timer 115 is reset when the difference in the brightness level becomes higher than the threshold value.

When the count at timer 115 reaches a predetermined time, control 114 sends a switching signal to video correction ROMs 108 to 110. As a result, video correction ROMs 108 to 110 switch from the gamma correction characteristics to the reverse correction characteristics, and the display unit displays an image with reversed brightness levels.

The sticking preventing technique described above has the following problems.

A method of displaying an image different from a content which should be displayed as the aforementioned screen saver is not applicable to a display intended for time display or the like due to a change in the content of an image which is desirably displayed as it is. Another method is to move an image on a screen or to display a darkened image, but in this case, a problem occurs associated with the difficulty of viewing the image which is desirably displayed.

While the display described in JP-A-9-6273 is applicable to the aforementioned time display, a problem of a higher cost is presented since it requires a gamma correction circuit with ROMs in which gamma correction characteristics and reverse correction characteristics are written.

In addition, the display described in the aforementioned JP-A-9-6273 may display the same image for a long time in the state after the switching to the reverse correction characteristics (sticking preventing operation state). In such a case, image sticking occurs similarly to a normal display state.

### SUMMARY OF THE INVENTION

It is an object of the present invention to provide a display which can solve the aforementioned problems, provide application to a display for time display or the like, and prevent sticking with a simple configuration, and a sticking preventing method.

To achieve the aforementioned object, the display of the present invention comprises:
display means for displaying an image with input of video display data including information on a brightness level of each display pixel;
data collecting means for acquiring and accumulating video display data supplied to the display means at certain time periods and for collecting brightness levels of the accumulated video display data for each display pixel;
average value calculating means for deriving an average value of the brightness levels for each display pixel from the result collected by the data collecting means;
reverse characteristics data converting means for obtaining reverse characteristic data with reversed brightness levels based on the average brightness level of each display pixel derived by the average value calculating means; and
control means for causing the reverse characteristic data obtained by the reverse characteristic data converting means to be displayed at the display means for a certain time period instead of the video display data.

The sticking preventing method of the present invention, comprises the steps of:
displaying an image with input of video display data including information on a brightness level of each display pixel on a display,
acquiring and accumulating video display data supplied to the display at certain time periods and collecting brightness levels from the accumulated video display data for each display pixel;
deriving an average value of the brightness levels for each display pixel from the collection result and obtaining reverse characteristic data with reversed high-and-low brightness levels based on the derived average brightness level of each display pixel; and
causing the reverse characteristic data to be displayed at the display for a certain time period instead of the video display data.

In a display such as a bulletin board used in public transportation, for example, the same image (character information) is continuously displayed for a long time. In such a display, the cumulative value of brightness levels for each display pixel on a screen is acquired, thereby making it possible to know how long continuous display is performed in which display pixel. Thus, based on the result, sticking can be prevented by reversing the brightness level between the display pixels in which continuous display is performed for a long time and the other display pixels.

In the present invention, the cumulative value of the brightness levels is acquired for each display pixel to derive the average value thereof, and based on the average brightness level of each display pixel, reverse characteristic data with reversed high-and-low brightness levels is derived. A display image from the reverse characteristic data is an image in which the brightness level is reversed between the display pixels continuously displayed for a long time and the other display pixels, i.e., a reversed image of the display image from the video display data. In the present invention, the display image from the reverse characteristic data is displayed for a certain time period instead of the display image from the video display data, thereby eliminating image sticking.

In addition, since the display image from the reverse characteristic data is the reversed image of the display image from the video display data as described above, the information in its original display image is not impaired.

Furthermore, since the display image from the reverse characteristic data is displayed for a certain time period, no image sticking occurs from the display of the reverse characteristic data.

Moreover, the present invention eliminates the need for a gamma correction circuit with a ROM in which gamma correction characteristics and reverse correction characteristics are written, thereby causing no increase in cost.

The above and other objects, features, and advantages of the present invention will become apparent from the following description with reference to the accompanying drawings which illustrate examples of the present invention.

### BRIEF DESCRIPTION OF THE DRAWINGS

In the accompanying drawings:
Fig. 1 is a block diagram showing a schematic configuration of a display with an image sticking preventing function disclosed in JP-A-9-6273;
Fig. 2 is a block diagram showing a schematic diagram of a display with a sticking preventing function of an embodiment of the present invention;
Fig. 3 is a block diagram showing a schematic configuration of a display with a sticking preventing function of another embodiment of the present invention;
Fig. 4 is a flow chart showing an example of a procedure for producing reverse characteristic data from video display data which is performed in the display shown in Fig. 3;
Fig. 5 is a flow chart showing a procedure of a display switching operation performed in the display shown in Fig. 3;
Fig. 6 is a flow chart showing a procedure of a display switching operation from video display data to reverse characteristic data which is performed in the display shown in Fig. 3; and
Fig. 7 is a flow chart showing a procedure of a display switching operation from the reverse characteristic data to the video display data which is performed in the display shown in Fig. 3.

### DESCRIPTION OF THE PREFERRED EMBODIMENTS

Next, embodiments of the present invention are described with reference to the drawings.

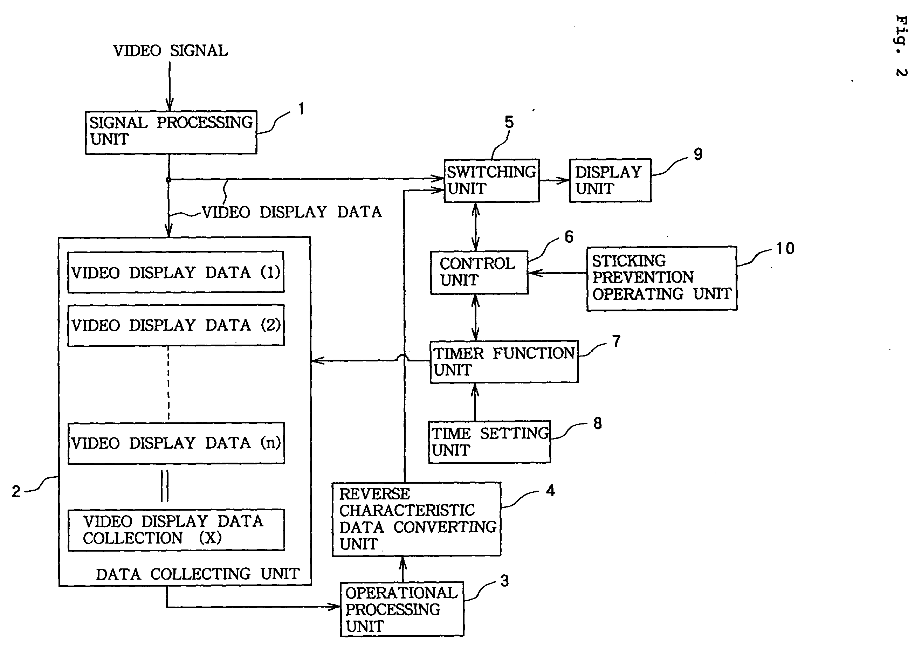

Fig. 2 is a block diagram showing a schematic configuration of a display with a sticking preventing function of an embodiment of the present invention. The display comprises signal processing unit 1, data collecting unit 2, operational processing unit 3, reverse characteristic data converting unit 4, switching unit 5, control unit 6, timer function unit 7, time setting unit 8, and display unit 9.

Signal processing unit 1 performs processing required for image display to video signals (frame structure) supplied thereto, and outputs video display data including brightness information. The output of the video display data is performed in frames, for example. The brightness information is brightness level information for each display pixel (each display element) constituting a display screen of display unit 9. The video display data received from signal processing unit 1 is provided to switching unit 5 and data collecting unit 2.

Data collecting unit 2 acquires and accumulates the video display data supplied from signal processing unit 1 in certain time periods, and collects the brightness levels of the accumulated video display data for each display pixel. Specifically, each time the video display data is acquired, data collecting unit 2 collects a predetermined number of the accumulated data by tracing the previous data from the currently acquired data. When the number of the accumulated video display data exceeds a preset number of frames (or memory capacity), the oldest data is erased to accumulate new data. Each time new data is accumulated, the data is collected. In the embodiment, n video display data (1) to (n) are accumulated as the accumulated data, and data collecting unit 2 provides video display data collection (X), which is the result of the data collection, to operational processing unit 3.

Operational processing unit 3 derives the average value of the video display data collection (X) supplied from data collecting unit 2. In this case, since the video display data collection (X) is the result of the accumulated brightness levels for each display pixel, operational processing unit 3 derives the average value of the luminance levels for each display pixel, and supplies video display data (X/n), which is the result of the operation, to reverse characteristic data converting unit 4.

Reverse characteristic data converting unit 4 converts the video display data (X/n) supplied from operational processing unit 3 into reverse characteristic data obtained by reversing the luminance levels of the respective display pixels. The reverse characteristic data after conversion at reverse characteristic data converting unit 4 is provided to the other input of switching unit 5.

Switching unit 5 is configured such that its inputs are switched in response to a switching request (switching signal) from control unit 6. Switching unit 5 provides the video display data supplied from signal processing unit 1 to display unit 9 in normal operation, and when the switching request (switching signal) is received from control unit 6, provides the reverse characteristic data supplied from reverse characteristic data converting unit 4 to display unit 9 instead of the video display data.

Timer function unit 7 counts the time interval for acquiring the video display data in data collecting unit 2 and counts a display time (display start time and display end time) of the reverse characteristic data with control unit 6, later described. These counted times at timer function unit 7 may be previously set, or may be arbitrarily set by an operator at time setting unit 8.

Control unit 6 causes the reverse characteristic data supplied from reverse characteristic data converting unit 4 to be displayed at display unit 9 for a certain time period instead of the video display data, and controls the switching of the inputs to switching unit 5 such that the reverse characteristic data is displayed for the certain time period in accordance with the result of the count at timer function unit 7 described above. Control unit 6 may control the switching of the inputs to switching unit 5 in accordance with a display start request and a display end request which are arbitrarily supplied by an operator through sticking prevention operating unit 10.

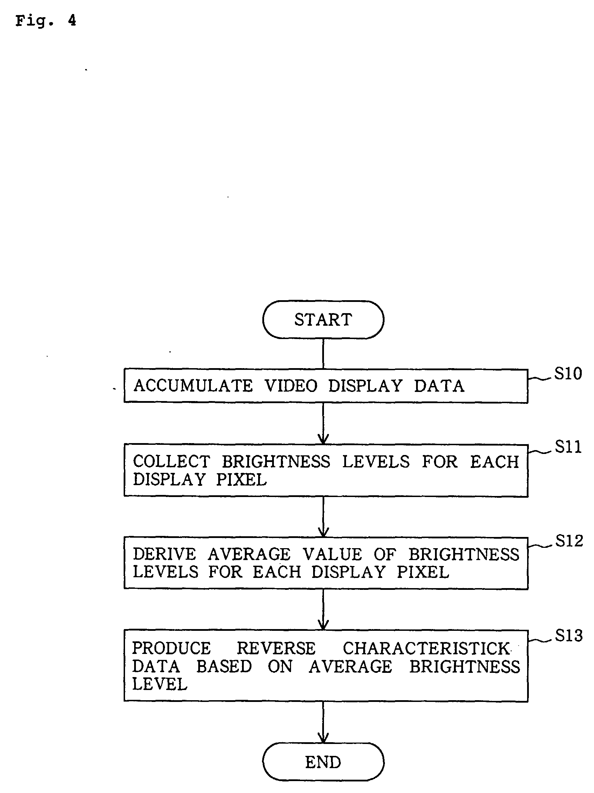

Next, the sticking preventing operation of the display is described specifically. First, description is made for a procedure of producing the reverse characteristic data from the video display data with reference to Fig. 4.

In normal operation, switching unit 5 supplies the video display data received from signal processing unit 1 to display unit 9 at which the image from the supplied video display data is displayed. At step S10, the video display data is acquired and accumulated in data collecting unit 2 in certain time periods. Subsequently at step S11, each time new video display data is accumulated, data collecting unit 2 collects the accumulated data, and supplies the collection result to operational processing unit 3 as the video display data collection (X). At step S12, operational processing unit 3 derives the average value of the video display data collection (X) and provides the video display data (X/n), which is the operation result, to reverse characteristic converting unit 4. At step S13, reverse characteristic data converting unit 4 derives the reverse characteristic data based on the video display data (X/n) supplied from operational processing unit 3. The reverse characteristic data is supplied to the other input of switching unit 5. At this point, since the count at timer function unit 7 does not reach the display start time of the reverse characteristic data, and no sticking preventing operation start request is received from sticking prevention operating unit 10, control unit 6 performs no switching of the inputs to switching unit 5. Thus, the video display data received from signal processing unit 1 is supplied to display unit 9.

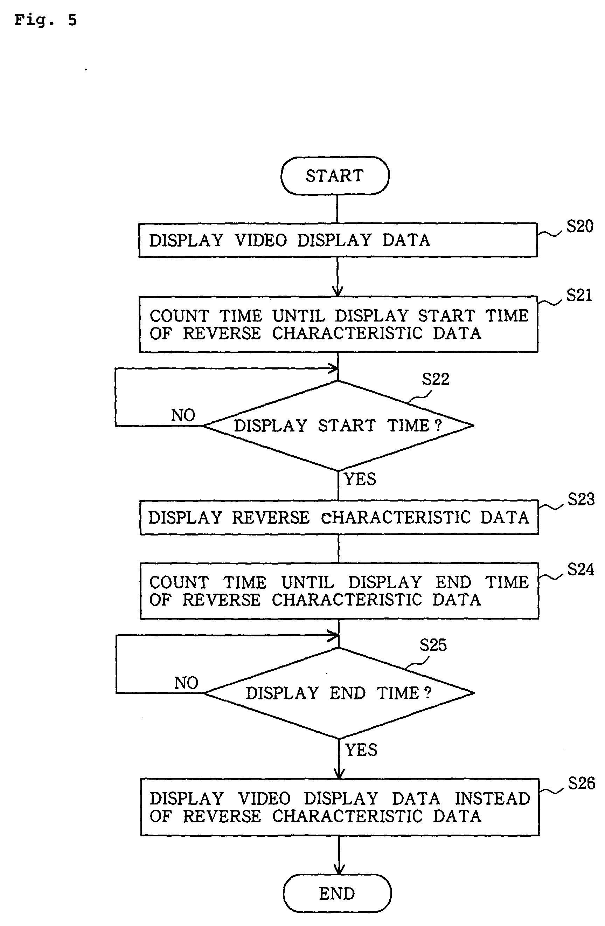

Next, the display switching operation is described with reference to Fig. 5.

First, at step S20, the video display data is displayed at display unit 9. subsequently at step S21, timer function unit 7 starts count of time until the display start time of the reverse characteristic data. At step S22, a check is made whether the count of timer function unit 7 reaches the set display start time of the reverse characteristic data, and if the display start time is reached, control unit 6 is informed of that. At step S23, control unit 6 sends to switching unit 5 a data switching request (switching signal) for requesting that the reverse characteristic data received from reverse characteristic data converting unit 4 is supplied to display unit 9 instead of the video display data received from signal processing unit 1. Switching unit 5, upon receiving the switching request from control unit 6, provides reverse characteristic data to display unit 9 instead of the video display data. As a result, the image from the reverse characteristic data is displayed at display unit 9.

When the display of the image from the aforementioned reverse characteristic data is started, timer function unit 7 simultaneously starts count of time until the display end time of the reverse characteristic data at step S24. At step S25, a check is made whether the count reaches the display end time of the reverse characteristic data, and if the display end time of the reverse characteristic data is reached, control unit 6 is informed of that. At step S26, control unit 6, upon receiving the notification that the display end time of the reverse characteristic data is reached, sends to switching unit 5 a data switching request (switching signal) for requesting that the video display data from signal processing unit 1 is supplied to display unit 9 instead of the reverse characteristic data from reverse characteristic data converting unit 4. Switching unit 5, upon receiving the switching request from control unit 6, outputs video display data to display unit 9 instead of the reverse characteristic data. As a result, display unit 9 again displays the image from the video display data received from signal processing unit 1.

The display of the reverse characteristic data with control unit 6 described above may be manually performed by an operator inputting a display start request and a display end request through sticking prevention operating unit 10. In the following, the display switching operation with sticking prevention operating unit 10 is described.

When the operator inputs the display start request for requesting the display of the reverse characteristic data at sticking prevention operating unit 10, control unit 6 is notified of that from sticking prevention operating unit 10. Control unit 6, upon receiving the display start request for the reverse characteristic data, sends to switching unit 5 a data switching request (switching signal) for requesting the output of the reverse characteristic data received from the reverse characteristic data converting unit 4 to display unit 9 instead of the video display data received from signal processing unit 1. Switching unit 5, upon receiving the switching request from control unit 6, outputs the reverse characteristic data to display unit 9 instead of the video display data. Display unit 9 thus displays the image from the reverse characteristic data.

After a lapse of an arbitrary time period (a time period in which no sticking occurs) from the display of the aforementioned image from the reverse characteristic data, the operator inputs the display end request for requesting the end of the display of the reverse characteristic data at sticking prevention operating unit 10, and control unit 6 is notified of that from sticking prevention operating unit 10. Control unit 6, upon receiving the display end request for the reverse characteristic data, sends to switching unit 5 a data switching request (switching signal) for requesting the output of the video display data received from signal processing unit 1 to display unit 9 instead of the reverse characteristic data received from reverse characteristic data converting unit 4. Switching unit 5, upon receiving the switching request from control unit 6, outputs the video display data to display unit 9 instead of the reverse characteristic data. As a result, display unit 9 displays the image from the video display data received from signal processing unit 1.

### (Another Embodiment)

In the aforementioned embodiment, the reverse characteristic data is displayed in accordance with the display start time and the display end time set at time function unit 7, or the display start request and the display end request supplied arbitrarily through sticking prevention operating unit 10. However, the reverse characteristic data may be displayed when the same image is displayed for a predetermined time period. Next, a specific configuration for realizing the operation is described. -

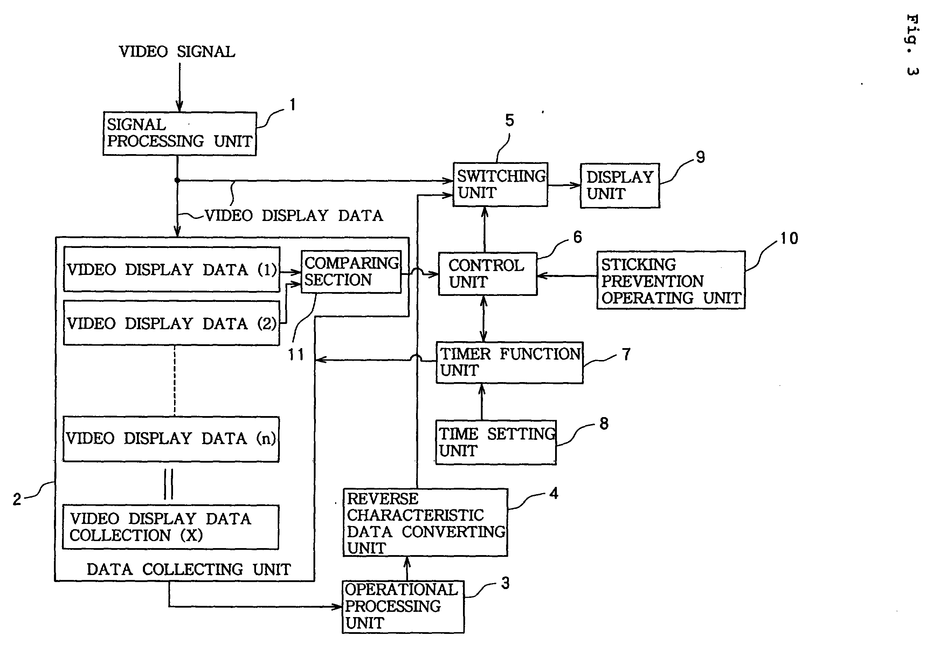

Fig. 3 shows a schematic configuration of a display which displays reverse characteristic data when the same image is displayed for a predetermined time period. The display has the same configuration as that of the display shown in Fig. 2 except that it is provided with comparing section 11 in data collecting unit 2. In Fig. 3, the same components as those of the display shown in Fig. 2 are designated with the same reference numerals. Since the operations of the same components are as described above, the description thereof is omitted.

Each time video display data is acquired, comparing section 11 compares the video display data with the video display data from the last acquisition to derive the difference in the brightness level for each display pixel between the data. In the example in Fig. 3, the difference in the brightness level for each display pixel between video display data (1) and (2) accumulated in data collecting unit 2 is derived, and the difference in the brightness level for each display pixel is sent to control unit 6.

Control unit 6 determines whether the same image is displayed on the basis of the difference in the brightness level for each display pixel derived at comparing section 11, and if the same image is displayed for a predetermined time period, controls the switching of the inputs to switching unit 5 such that reverse characteristic data is displayed for a predetermined time period. Timer function unit 7 performs, in addition to the aforementioned time setting function, count in accordance with a count start direction from control unit 6, and when the count reaches a predetermined time, informs control unit 6 of that. In the present embodiment, control unit 6 is supplied with the timing of the display start and display end of the reverse characteristic data from the count at timer function unit 7.

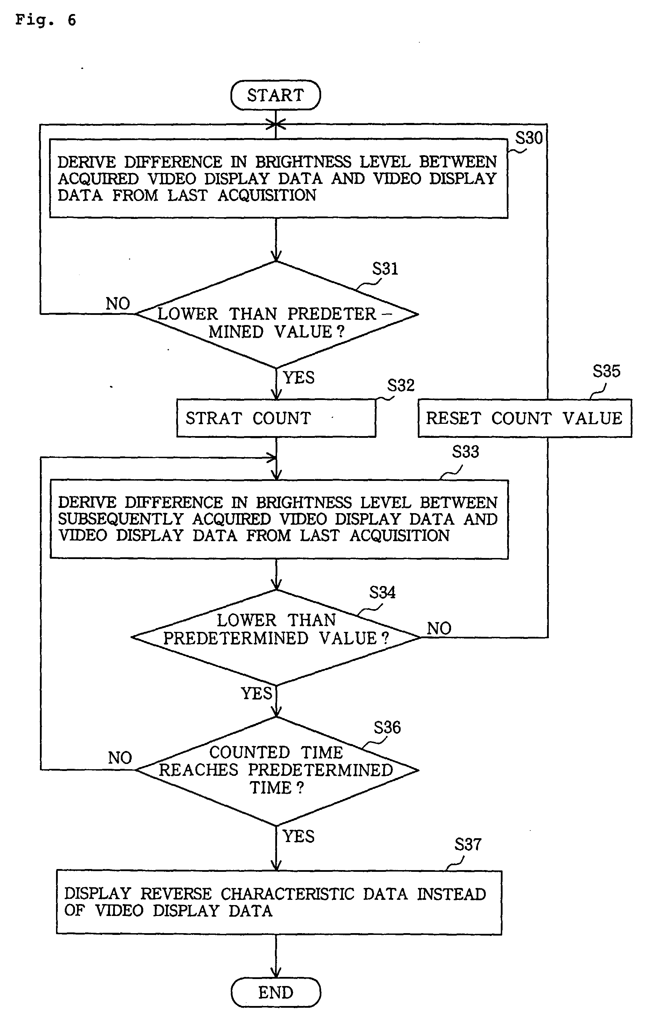

In the following, the operation of the display of the embodiment is specifically described with reference to Fig. 6.

First, description is made for steps to the start of the display of the reverse characteristic data.

At step S30, comparing section 11 compares video display data newly acquired by data collecting unit 2 with the video display data from the last acquisition to derive the difference in the brightness level for each display pixel between the data. At step S31, control unit 6 determines whether the difference in the brightness level received from comparing section 11 is lower than a predetermined value. If the difference in the brightness level is equal to or higher than the predetermined value, the determination is made that different images are displayed, and the procedure returns to the processing at the aforementioned step S30.

When the difference in the brightness level is lower than the predetermined value and the determination is made that the same image is displayed at the aforementioned step S31, subsequently at step S32, timer function unit 7 starts count of time until the start of the display of the reverse characteristic data. At step S33, comparing section 11 compares newly acquired video display data with the video display data from the last acquisition to derive the difference in the brightness level for each display pixel between the data. At step S34, control unit 6 determines whether the difference in the brightness level received from comparing section 11 is lower than the predetermined value. When the difference in the brightness level is equal to or higher than the predetermined value, the count value of timer function unit 7 is reset at step S35, and the procedure returns to the aforementioned step S30. Alternatively, when the difference in the brightness level is lower than the predetermined value, control unit 6 determines that the same image is displayed, and subsequently at step S36, determines whether the count of timer function unit 7 reaches the predetermined time. When the count of timer function unit 7 does not reach the predetermined time, the procedure returns to the processing at the aforementioned step S33. When the count at timer function unit 7 reaches the predetermined time, control unit 6 determines that the same image is displayed for a predetermined time period at step S37, and performs the switching of the inputs to switching unit 5 such that the reverse characteristic data is displayed.

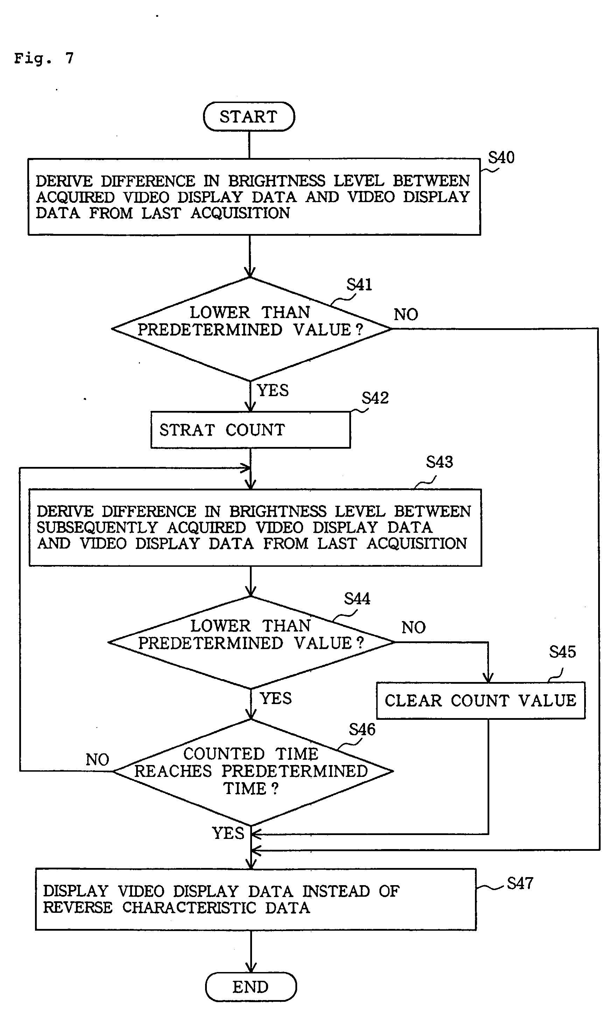

Next, steps to the end of the display of the reverse characteristic data are described with reference to Fig.7.

At step S40, comparing section 11 compares video display data newly acquired by data collecting unit 2 with the video display data from the last acquisition to derive the difference in the brightness level for each display pixel between the data. At step S41, control unit 6 determines whether the difference in the brightness level received from comparing section 11 is lower than the predetermined value. When the difference in the brightness level is equal to or higher than the predetermined value, the determination is made that different images are displayed, and the procedure moves to the processing at step S47, later described.

When the difference in the brightness level is lower than the predetermined value and the determination is made that the same image is displayed at the aforementioned step S41, timer function unit 7 starts count of time until the end of the display of the reverse characteristic data at step S42. At step S43, comparing section 11 compares video display data newly acquired by data collecting unit 2 with the video display data from the last acquisition to derive the difference in the brightness level for each display pixel between the data. At step S44, control unit 6 determines whether the difference in the brightness level received from comparing section 11 is lower than the predetermined value. When the difference in the brightness level is equal to or higher than the predetermined value, the count of timer function unit 7 is reset at step S47, and the procedure moves to the processing at step S47, later described.

When the difference in the brightness level is lower than the predetermined value, control unit 6 determines that the same image is displayed and determines whether the count of timer function unit 7 reaches the predetermined time at step S46. When the count value at timer function unit 7 does not reach the predetermined time, the procedure returns to the aforementioned processing at step S43. When the count value at timer function unit 7 reaches the predetermined time, control unit 6 determines that the same image is displayed for the predetermined time period and performs the switching of the inputs to switching unit 5 such that the video display data is displayed instead of the reverse characteristic data.

As described above, in the display of the embodiment, the difference in the brightness level between the video display data acquired by the data collecting unit is derived to allow the determination whether the same image is displayed. When the same image is displayed for the predetermined time period, the reverse characteristic data is displayed for a certain time period.

The respective embodiments described above contemplates, as its display unit, a dot matrix data display such as a plasma display or a liquid crystal display. When an analog display such as a CRT display is used for the display unit, an A/D converter is required for converting video display data in analog form acquired by the data collecting unit into digital form, and a D/A converter is required for converting reverse characteristic data (digital) received from the reverse characteristic data converting unit into analog data.

In addition, a normal screen saver may be configured by applying the configurations of the aforementioned respective embodiments. In this case, a still image displayed for a certain time period immediately before the operation of the screen saver is utilized such that the still image is accumulated to obtain reverse characteristic data.

As described above, the present invention can be applied to a display for time display or the like since the content of a displayed image is not changed. Additionally, the display of the present invention requires no gamma correction circuit with a ROM in which gamma correction characteristics and reverse correction characteristics are written, and allows sticking prevention with a simple configuration which derives the reverse characteristic data from the accumulated value of the brightness levels for each display pixel, thereby achieving a reduction in cost.

Furthermore, according to the present invention, since the reverse characteristic data is derived from the accumulated value of the brightness levels for each display pixel, the sticking can be more effectively prevented as compared with the simple reversal of the display image of the video display data.

While preferred embodiments of the present invention have been described using specific terms, such description is for illustrative purposes only, and it is to be understood that changes and variations may be made without departing from the spirit or scope of the following claims.

## Claims

1. A display with a sticking preventing function, comprising:
display means for displaying an image with input of video display data including information on a brightness level of each display pixel;
data collecting means for acquiring and accumulating video display data supplied to said display means at certain time periods and for collecting brightness levels of the accumulated video display data for each display pixel;
average value calculating means for deriving an average value of the brightness levels for each display pixel from the result collected by said data collecting means;
reverse characteristics data converting means for obtaining reverse characteristic data with reversed brightness levels based on the average brightness level of each display pixel derived by said average value calculating means; and
control means for causing the reverse characteristic data obtained by said reverse characteristic data converting means to be displayed at said display means for a certain time period instead of said video display data.

2. The display with a sticking preventing function according to claim 1, wherein said data collecting means is configured, each time video display data is acquired, to collect a predetermined number of the accumulated data by tracing the previous data from the acquired data.

3. The display with a sticking preventing function according to claim 1, further comprising timer function means for counting a certain time period, and wherein said data collecting means is configured to acquire video display data at certain time periods in accordance with the count result of said timer function means.

4. The display with a sticking preventing function according to claim 3, further comprising time setting means for performing time setting, and wherein said timer function means is configured to repeatedly count a time set by said time setting means.

5. The display with a sticking preventing function according to claim 1, further comprising timer function means for counting a set time, and wherein said control means is configured to cause the reverse characteristic data to be displayed for a certain time period in accordance with the count result of said timer function means.

6. The display with a sticking preventing function according to claim 5, further comprising time setting means for performing time setting, and wherein said time function means is configured to count a time set by said time setting means.

7. The display with a sticking preventing function according to claim 1, further comprising comparing means for comparing, each time video display data is acquired by said data collecting means, the newly acquired video display data with video display data from the last acquisition to derive the difference in the brightness level between the data for each display pixel, and wherein said control means is configured to determine whether the same image is displayed on the basis of the difference in the brightness level for each display pixel derived by said comparing means and, if the same image is displayed for a predetermined time period, to display the reverse characteristic data for a certain time period.

8. The display with a sticking preventing function according to claim 1, further comprising operating means for requesting display start and display end of said reverse characteristic data, and wherein said control means is configured to control the display of the reverse characteristic data in response to a display start request and a display end request for the reverse characteristic data received from said operating means.

9. The display with a sticking preventing function according to claim 1, wherein said display means is an analog display, and further comprising A/D converting means for A/D converting the video display data acquired by said data collecting means, and D/A converting means for D/A converting the reverse characteristic data supplied to said display means.

10. A method of preventing sticking, comprising the steps of:
displaying an image with input of video display data including information on a brightness level of each display pixel on a display;
acquiring and accumulating video display data supplied to said display at certain time periods and collecting brightness levels from the accumulated video display data for each display pixel;
deriving an average value of the brightness levels for each display pixel from the collection result and obtaining reverse characteristic data with reversed brightness levels based on the derived average brightness level of each display pixel; and
causing said reverse characteristic data to be displayed at said display for a certain time period instead of said video display data.

11. The method of preventing sticking according to claim 10, wherein said acquiring and accumulating step includes collecting, each time video display data is acquired, a predetermined number of the accumulated data by tracing the previous data from the acquired data.

12. The method of preventing sticking according to claim 10, further comprising the steps of:
deriving the difference in the brightness level for each display pixel between newly acquired video display data with video display data from the last acquisition for the video display data accumulated at said acquiring and accumulating step; and
determining that the same image is displayed at said display if the difference in the brightness level derived at said deriving step is lower than a predetermined value, and determining that different images are displayed at said display if the difference in the brightness level is equal to or higher than the predetermined value, and wherein said causing step is performed when the determination is made at said determining step that the same image is displayed at said display for a predetermined time period.
